# EUROPÄISCHE PATENTSCHRIFT

(11) **EP 1 476 453 B1**
(45) Veröffentlichungstag und Bekanntmachung des Hinweises auf die Patenterteilung: **05.09.2007**
(21) Anmeldenummer: 03702624.2
(22) Anmeldetag: 12.02.2003
(51) Int. Cl.: C07F 9/6571

(54) **VERFAHREN ZUR HERSTELLUNG VON 6-ALKOXY-(6H)-DIBENZ(C,E)(1,2)-OXAPHOSPHORINEN**
METHOD FOR PRODUCING 6-ALKOXY-(6H)-DIBENZ C,E| 1,2|-OXAPHOSPHORINES
PROCEDE DE PRODUCTION DE 6-ALCOXY-(6H)-DIBENZO C,E| 1,2|-OXAPHOSPHORINES

(30) Priorität: 20.02.2002 DE 10206982
(43) Veröffentlichungstag der Anmeldung: 17.11.2004
(73) Patentinhaber: Forschungszentrum Karlsruhe GmbH, 76133 Karlsruhe (DE)
(72) Erfinder: SPRENGER, Stephan, 22113 Oststeinbek (DE); CIESIELSKI, Michael, 06217 Merseburg (DE); KOLLANN, Carsten, 97072 Würzburg (DE); DÖRING, Manfred, 76744 Wörth-Büchelberg (DE)
(74) Vertreter: Fitzner, Uwe
(86) Internationale Anmeldenummer: PCT/EP2003/001368
(87) Internationale Veröffentlichungsnummer: WO 2003/070736

(56) Entgegenhaltungen:
- EP-A- 0 304 782
- EP-A- 0 787 738
- CHERNYSHEV E A ET AL: "ORGANOPHOSPHOROUS HETEROCYCLIC COMPOUNDS. III. SYNTHESIS AND REACTIONS OF 6-CHLORO-6H-DIBENZ(c,e)(1,2) OXAPHOSPHORINE" JOURNAL OF GENERAL CHEMISTRY USSR, CONSULTANTS BUREAU. NEW YORK, US, Bd. 42, Nr. 1, PART 1, 1972, Seiten 88-90, XP002030342

## Beschreibung

Die vorliegende Erfindung betrifft die Herstellung von 6-Alkoxy-(6H)-dibenz[c,e][1,2]-oxaphosphorinen.

Aus der Literatur ist als Methode zur Darstellung der 6-Alkoxy-(6H)-dibenz[c,e][1,2]-oxaphosphorine ausschließlich die Alkoholyse der 6-Chlor-(6H)-dibenz[c,e][1,2]-oxaphosphorine in Gegenwart stöchiometrischer Mengen Base, wie tertiäre Amine oder Ammoniak bekannt (EP 0787738 A1, EP 0304782 A2, Phosphorus and Sulfur 1987, 31, S. 71).

Reaktionen von 6H-Dibenz[c,e][1,2]-oxaphosphorin-6-oxiden mit Orthoameisensäureestem ergaben bisher nur selektiv 6-(Dialkoxymethyl)-dibenz[c,e][1,2]-oxaphosphorin-6-oxide (J. praktische Chemie 1979, 321, S. 361).

Die Darstellung von 6-Alkoxy-(6H)-dibenz[c,e][1,2]-oxaphosphorinen durch Alkoholyse von 6-Chlor-(6H)-dibenz[c,e][1,2]-oxaphosphorinen mittels Basen erfordert eine zweistufige Darstellung des 6-Chlor-Derivats aus o-Hydroxybiphenyl und Phosphortrichlorid mit einer unbefriedigenden Gesamtausbeute von weniger als 50 %. Gerade die zweite Synthesestufe wird dabei Metallhalogenid-katalysiert bei Temperaturen über 200°C und unter HCl-Eliminierung durchgeführt. Dieses Verfahren stellt an die Technik so hohe Anforderungen, dass eine technische Lösung bisher nicht erwogen wurde. Dagegen ist das 6H-Dibenz[c,e][1,2]-oxaphosphorin-6-oxid heute bereits industriell verfügbar und wird in Ausbeuten über 95 % in einer Einstufensynthese aus gleichen Edukten hergestellt (EP 0806429 A2).

Es ist somit wünschenswert, ein Verfahren zu entwickeln, welches auf einfachem und kostengünstigen Weg die Herstellung der 6-Alkoxy-(6H)-dibenz[c,e][1,2]-oxaphosphorine ermöglicht. Diese sind als Zusatzmittel bzw. Modifier für mehrere Kunststoffe sowie als Zwischenprodukte zur Herstellung von Photoinitiatoren bereits bekannt (EP-PS 0292786, 7856250 und EP-OS 0304782).

Die erfindungsgemäße Aufgabe wird dadurch gelöst, daß 6H-Dibenz[c,e][1,2]-oxaphosphorin-6-oxide der Formel I 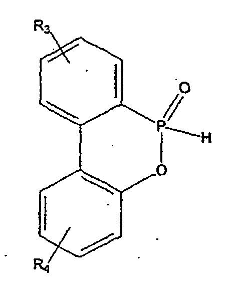 als Edukt eingesetzt werden.

Das erfindungsgemäße Verfahren beinhaltet im allgemeinen folgende Einzelschritte: 1) Bereitstellung wenigstens eines Lösemittels, 2) Zugabe des Edukts, 3) Zugabe eines Orthoesters , 4) Zusatz eines Alkohols, sofern dieser nicht bereits in Form des Lösemittels vorliegt.

Als Lösungsmittel kommen Methanol, Ethanol und nichtaromatische substituierte Alkohole, Benzol, alkylierte Benzole, aliphatische und cycloaliphatische Ether in Betracht.

Erfindungsgemäß handelt es sich nach dem gesagten um Verfahren zur schonenden und selektiven Herstellung von 6-Alkoxy-(6H)-dibenz[c,e][1,2]-oxaphosphorinen durch Umsetzung technisch verfügbarer 6H-Dibenz[c,e][1,2]-oxaphosphorin-6-oxide mit Orthocarbonsäureestem, das säurekatalysiert ist. Durch die Wahl eines geeigneten Alkohols als Reaktionsmedium kann das gewünschte 6-Alkoxy-(6H)-dibenz[c,e][1,2]-oxaphosphorinen dann durch in-situ Umesterung vermittels diesen Alkohols erhalten wird. Entsprechend läßt sich die Reaktion wie folgt darstellen:

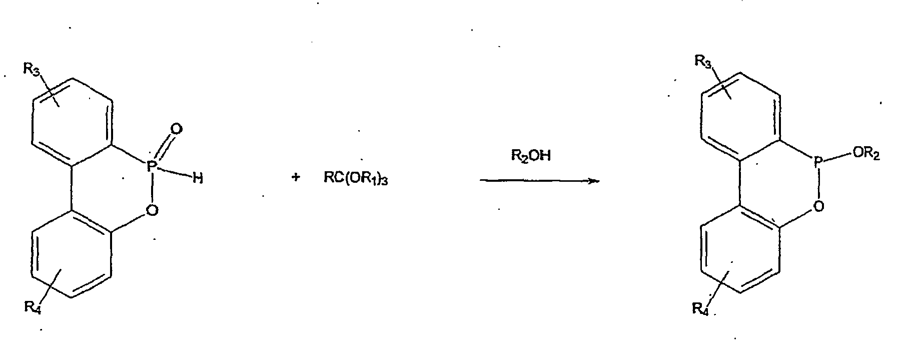

Für die Reste R₁ und R₂ in den oben genannten Formeln könne u.a. im einzelnen folgende Stoffe eingesetzt werden:
Ggf. subst. Alkyl: gesättigte, geradkettige oder verzweigte Kohlenwasserstoffreste, insbesondere mit 1 bis 10 Kohlenstoffatomen, z.B. C1-C6-Alkyl wie Methyl, Ethyl, Propyl, 1-Methylethyl, Butyl, 1-Methylpropyl, 2-Methylpropyl, 1,1-Dimethylethyl, Pentyl, 1-Methylbutyl, 2-Methylbutyl, 3-Methylbutyl, 2,2-Di-methylpropyl, 1-Ethylpropyl, Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl;
Ggf. subst: Alkenyl: ungesättigte, geradkettige oder verzweigte Kohlenwasserstoffreste, insbesondere mit 2 bis 10 Kohlenstoffatomen und einer Doppelbindung in einer beliebigen Position, z.B. C2-C6-Alkenyl wie Ethenyl, 1-Propenyl, 2-Propenyl, 1-Methylethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3, 1,1,2-Trimethyl-2-propenyl, 1-Ethyl-1-methyl-2-propenyl, 1-Ethyl-2-methyl-1-propenyl und 1-Ethyl-2-methyl-2-propenyl;
Ggf. subst. Alkinyl: geradkettige oder verzweigte Kohlenwasserstoffgruppen, insbesondere mit 2 bis 20 Kohlenstoffatomen und einer Dreifachbindung in einer beliebigen Position, z.B. C2-C6-Alkinyl wie Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl- 1-pentinyl, 3-Methyl-4-pentinyl, 4-Methyl-1-pentinyl, 4-Methyl-2-pentinyl, 1,1-Dimethyl-2-butinyl, 1,1-Di-methyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl und 1-Ethyl-1-methyl-2-propinyl;
Ein ggf. subst. gesättigter oder ein- oder zweifach ungesättigter Ring, welcher neben Kohlenstoffatomen ein bis drei der folgenden Heteroatome als Ringglieder enthalten kann: Sauerstoff, Schwefel und Stickstoff, beispielsweise Carbocyclen wie Cyclopropyl, Cyclopentyl, Cyclohexyl, Cyclopent-2-enyl, Cyclohex-2-enyl, 5- bis -6-gliedrige, gesättigte oder ungesättigte Heterocyclen, enthaltend ein bis drei Stickstoffatome und/oder ein Sauerstoff- oder Schwefelatom wie 2-Tetrahydrofuranyl, 3-Tetrahydrofuranyl, 2-Tetrahydrothienyl, 3-Tetrahydrothienyl, 2-Pyrrolidinyl, 3-Pyrrolidinyl, 3-Isoxazolidinyl, 4-Isoxazolidinyl, 5-Isoxazolidinyl, 3-Isothiazolidinyl, 4-Isothiazolidinyl, 5-Isothiazolidinyl, 3-Pyrazolidinyl, 4-Pyrazolidinyl, 5-Pyrazolidinyl, 2-Oxazolidinyl, 4-Oxazolidinyl, 5-Oxazolidinyl, 2-Thiazolidinyl, 4-Thiazolidinyl, 5-Thiazolidinyl, 2-Imidazolidinyl, 4-Imidazolidinyl, 1,2,4-Oxadiazolidin-3-yl, 1,2,4-Oxadiazolidin-5-yl, 1,2,4-Thiadiazolidin-3-yl, 1,2,4-Thiadiazolidin-5-yl,1,2,4-Triazolidin-3-yl, 1,3,4-Oxadiazolidin-2-yl, 1,3,4-Thiadiazolidin-2-yl, 1,3,4-Triazolidin-2-yl, 2,3-Dihydrofur-2-yl, 2,3-Dihydrofur-3-yl, 2,4-Dihydrofur-2-yl, 2,4-Dihydrofur-3-yl, 2,3-Dihydrothien-2-yl, 2,3-Dihydrothien-3-yl, 2,4-Dihydrothien-2-yl, 2,4-Dihydrothien-3-yl, 2,3-Pyrrolin-2-yl, 2,3-Pyrrolin-3-yl, 2,4-Pyrrolin-2-yl, 2,4-Pyrrolin-3-yl, 2,3-Isoxazolin-3-yl, 3,4-Isoxazolin-3-yl, 4,5-Isoxazolin-3-yl, 2,3-Isoxazolin-4-yl, 3,4-Isoxazolin-4-yl, 4,5-Isoxazolin-4-yl, 2,3-Isoxazolin-5-yl, 3,4-Isoxazolin-5-yl, 4,5-Isoxazolin-5-yl, 2,3-Isothiazolin-3-yl, 3,4-Isothiazolin-3-yl, 4,5-Isothiazolin-3-yl, 2,3-Isothiazolin-4-yl, 3,4-Isothiazolin-4-yl, 4,5-Isothiazolin-4-yl, 2,3-Isothiazolin-5-yl, 3,4-Isothiazolin-5-yl, 4,5-Isothiazolin-5-yl, 2,3-Dihydropyrazol-1-yl, 2,3-Dihydropyrazol-2-yl, 2,3-Dihydropyrazol-3-yl, 2,3-Dihydropyrazol-4-yl, 2,3-Dihydropyrazol-5-yl, 3,4-Dihydropyrazol-1-yl, 3,4-Dihydropyrazol-3-yl, 3,4-Dihydropyrazol-4-yl, 3,4-Dihydropyrazol-5-yl, 4,5-Dihydropyrazol-1-yl, 4,5-Dihydropyrazol-3-yl, 4,5-Dihydropyrazol-4-yl, 4,5-Dihydropyrazol-5-yl, 2,3-Dihydrooxazol-2-yl, 2,3-Dihydrooxazol-3-yl, 2,3-Dihydrooxazol-4-yl, 2,3-Dihydrooxazol-5-yl, 3,4-Dihydrooxazol-2-yl, 3,4-Dihydrooxazol-3-yl, 3,4-Dihydrooxazol-4-yl, 3,4-Dihydrooxazol-5-yl, 3,4-Dihydrooxazol-2-yl, 3,4-Dihydrooxazol-3-yl, 3,4-Dihydrooxazol-4-yl, 2-Piperidinyl, 3-Piperidinyl, 4-Piperidinyl, 1,3-Dioxan-5-yl, 2-Tetrahydropyranyl, 4-Tetrahydropyranyl, 2-Tetrahydrothienyl, 3-Tetrahydropyridazinyl, 4-Tetrahydropyridazinyl, 2-Tetrahydropyrimidinyl, 4-Tetrahydropyrimidinyl, 5-Tetrahydropyrimidinyl, 2-Tetrahydropyrazinyl, 1,3,5-Tetrahydro-triazin-2-yl und 1,2,4-Tetrahydrotriazin-3-yl, vorzugsweise 2-Tetrahydrofuranyl, 2-Tetrahydrothienyl, 2-Pyrrolidinyl, 3-Isoxazolidinyl, 3-Isothiazolidinyl, 1,3,4-Oxazolidin-2-yl, 2,3-Dihydrothien-2-yl, 4,5-Isoxazolin-3-yl, 3-Piperidinyl, 1,3-Dioxan-5-yl, 4-Piperidinyl, 2-Tetrahydropyranyl, 4-Tetrahydropyranyl;
Für die Reste R₃ und R₄ in den oben genannten Formeln können u.a. im einzelnen folgende Stoffe eingesetzt werden:
   Alkoxy: geradkettige oder verzweigte Alkylgruppen mit ein bis 30 Kohlenstoffatomen (wie vorstehend genannt), welche über ein Sauerstoffatom (-O-) an das Gerüst gebunden sind.
   Alkylthio: geradkettige oder verzweigte Alkylgruppen mit ein bis 30 Kohlenstoffatomen (wie vorstehend genannt), welche über ein Schwefelatom (-S-) an das Gerüst gebunden sind.
Ggf. subst. Alkyl, wie oben für R₁ und R₂ beschrieben.
Ggf. subst. Alkenyl, wie oben für R₁ und R₂ beschrieben.
Ggf. subst. Alkinyl wie oben für R₁ und R₂ beschrieben.
Ein ggf. subst. gesättigter oder ein- oder zweifach ungesättigter Ring, wie oben für R₁ und R₂ beschrieben.
Ein ggf. subst. ein- oder zweikerniges aromatisches Ringsystem, welches neben Kohlenstoffatomen ein bis vier Stickstoffatome oder ein oder zwei Stickstoffatome und ein Sauerstoff- oder Schwefelatom oder ein Sauerstoff- oder Schwefelatom als Ringglieder enthalten kann, d.h. Arylreste wie Phenyl und Naphthyl, vorzugsweise Phenyl oder 1- oder 2-Naphthyl, und Hetarylreste, beispielsweise 5-Ring Heteroaromaten enthaltend ein bis drei Stickstoffatome und/oder ein Sauerstoff- oder Schwefelatom wie 2-Furyl, 3-Furyl, 2-Thienyl, 3-Thienyl, 1-Pyrrolyl, 2-Pyrrolyl, 3-Pyrrolyl, 3-Isoxazolyl, 4-Isoxazolyl, 5-Isoxazolyl, 3-Isothiazolyl, 4-Isothiazolyl, 5-Isothiazolyl, 1-Pyrazolyl, 3-Pyrazolyl, 4-Pyrazolyl, 5-Pyrazolyl, 2-Oxazolyl, 4-Oxazolyl, 5-Oxazolyl, 2-Thiazolyl, 4-Thiazolyl, 5-Thiazolyl, 1-Imidazolyl, 2-Imidazolyl, 4-Imidazolyl, 1,2,4-Oxadiazol-3-yl, 1,2,4-Oxadiazol-5-yl, 1,2,4-Thiadiazol-3-yl, 1,2,4-Thiadiazol-5-yl, 1,2,5-Triazol-3-yl, 1,2,3-Triazol-4.-yl, 1,2,3-Triazol-5-yl, 1,2,3-Triazol-4-yl, 5-Tetrazolyl, 1,2,3,4-Thiatriazol-5-yl und 1,2,3,4-Oxatriazol-5-yl, insbesondere 3-Isoxazolyl, 5-Isoxazolyl, 4-Oxazolyl, 4-Thiazolyl, 1,3,4-Oxadiazol-2-yl und 1,3,4-Thiadiazol-2-yl;
Sechsring-Heteroaromaten enthaltend ein bis vier Stickstoffatome als Heteroatome wie 2-Pyridinyl, 3-Pyridinyl, 4-Pyridinyl, 3-Pyridazinyl, 4-Pyridazinyl, 2-Pyrimidinyl, 4-Pyrimidinyl, 5-Pyrimidinyl, 2-Pyrazinyl, 1,3,5-Triazin-2-yl, 1,2,4-Triazin-3-yl und 1,2,4,5-Tetrazin-3-yl, insbesondere 2-Pyridinyl, 3-Pyridinyl, 4-Pyridinyl, 2-Pyrimidinyl, 4-Pyrimidinyl, 2-Pyrazinyl und 4-Pyridazinyl.

Der Zusatz "ggf. subst." in Bezug auf Alkyl-, Alkenyl- und Alkinylgruppen soll zum Ausdruck bringen, daß diese Gruppen partiell oder vollständig halogeniert sein können (d.h. die Wasserstoffatome dieser Gruppen können teilweise oder vollständig durch gleiche oder verschiedene Halogenatome wie vorstehend genannt (vorzugsweise Fluor, Chlor und Brom, insbesondere Fluor und Chlor) ersetzt sein können und/oder einen bis drei, insbesondere einen, der folgenden Reste tragen können:
Nitro, Cyano, C1-C4-Alkoxy, C1-C4-Alkoxycarbonyl oder ein ggf. subst. ein- oder zweikerniges aromatisches Ringsystem, welches neben Kohlenstoffatomen ein bis vier Stickstoffatome oder ein oder zwei Stickstoffatome und ein Sauerstoff- oder Schwefelatom oder ein Sauerstoff- oder Schwefelatom als Ringglieder enthalten kann, d.h. Arylreste wie Phenyl und Naphthyl, vorzugsweise Phenyl oder 1- oder 2-Naphthyl, und Hetarylreste, beispielsweise 5-Ring Heteroaromaten enthaltend ein bis drei Stickstoffatome und/oder ein Sauerstoff- oder Schwefelatom wie 2-Furyl, 3-Furyl, 2-Thienyl, 3-Thienyl, 1-Pyrrolyl, 2-Pyrrolyl, 3-Pyrrolyl, 3-Isoxazolyl, 4-Isoxazolyl, 5-Isoxazolyl, 3-Isothiazolyl, 4-Isothiazolyl, 5-Isothiazolyl, 1-Pyrazolyl, 3-Pyrazolyl, 4-Pyrazolyl, 5-Pyrazolyl; 2-Oxazolyl, 4-Oxazolyl, 5-Oxazolyl, 2-Thiazolyl, 4-Thiazolyl, 5-Thiazolyl, 1-Imidazolyl, 2-Imidazolyl, 4-Imidazolyl, 1,2,4-Oxadiazol-3-yl, 1,2,4-Oxadiazol-5-yl, 1,2,4-Thiadiazol-3-yl, 1,2,4-Thiadiazol-5-yl, 1,2,5-Triazol-3-yl, 1,2,3-Triazol-4-yl, 1,2,3-Triazol-5-yl, 1,2,3-Triazol-4-yl, 5-Tetrazolyl, 1,2,3,4-Thiatriazol-5-yl und 1,2,3,4-Oxatriazol-5-yl, insbesondere 3-Isoxazolyl, 5-Isoxazolyl, 4-Oxazolyl, 4-Thiazolyl, 1,3,4-Oxadiazol-2-yl und 1,3,4-Thiadiazol-2-yl;
Sechsring-Heteroaromaten enthaltend ein bis vier Stickstoffatome als Heteroatome wie 2-Pyridinyl, 3-Pyridinyl, 4-Pyridinyl, 3-Pyridazinyl, 4-Pyridazinyl, 2-Pyrimidinyl, 4-Pyrimidinyl, 5-Pyrimidinyl, 2-Pyrazinyl, 1,3,5-Triazin-2-yl, 1,2,4-Triazin-3-yl und 1,2,4,5-Tetrazin-3-yl, insbesondere 2-Pyridinyl, 3-Pyridinyl, 4-Pyridinyl, 2-Pyrimidinyl, 4-Pyrimidinyl, 2-Pyrazinyl und 4-Pyridazinyl.
Der Zusatz "ggf. subst" in Bezug auf die cyclischen (gesättigten, ungesättigtern oder aromatischen) Gruppen soll zum Ausdruck bringen, daß diese Gruppen partiell oder vollständig halogeniert sein können (d.h. die Wasserstoffatome dieser Gruppen können teilweise oder vollständig durch gleiche oder verschiedene Halogenatome wie vorstehend genannt (vorzugsweise Fluor, Chlor und Brom, insbesondere Fluor und Chlor) ersetzt sein können und/oder einen bis drei, der folgenden Reste tragen können: Nitro, Cyano, C1-C4-Alkyl, C1-C4-Alkoxy und C1-C4-Alkoxycarbonyl.

Die bei den Resten genannten ein- oder zweikernigen aromatischen oder heteroaromatischen Systeme können ihrerseits partiell oder vollständig halogeniert sein, d.h. die Wasserstoffatome dieser Gruppen können partiell oder vollständig durch Halogenatome wie Fluor, Chlor, Brom und Jod, vorzugsweise Fluor und Chlor ersetzt sein.

Diese ein- oder zweikernigen aromatischen oder heteroaromatischen Systeme können neben den bezeichneten Halogenatomen zusätzlich ein bis drei der folgenden Substituenten tragen:
Nitro, Cyano, Thiocyanato;
Alkyl, besonders C1-C6-Alkyl wie vorstehend genannt,
C1-C30-Alkoxy,
C1-C30-Alkylthio,
C1-C4-Alkylamino,
C1-C6-Alkylcarbonyl;
C1-C6-Alkoxycarbonyl,
C1-C6-Alkylaminocarbonyl,
C1-C6-Alkylcarboxyl,
C1-C6-Alkylcarbonylamino,
C3-C7-Cycloalkyl wie Cyclopropyl, Cyclobutyl, Cyclopentyl, Cyclohexyl und Cycloheptyl, vorzugsweise Cyclopropyl, Cyclopentyl und Cyclohexyl, insbesondere Cyclopropyl;
C3-C7-Cycloalkoxy wie Cyclopropyloxy, Cyclobutyloxy, Cyclopentyloxy, Cyclohexyloxy und Cycloheptyloxy, vorzugsweise Cyclopentyloxy und Cyclohexyloxy, insbesondere Cyclohexyloxy;
C3-C7-Cycloalkylthio wie Cyclopropylthio, Cyclobutylthio, Cyclopentylthio, Cyclohexylthio und Cycloheptylthio, vorzugsweise Cyclohexylthio;
C3-C7-Cycloalkylamino wie Cyclopropylamino, Cyclobutylamino, Cyclopentylamino, Cyclohexylamino und Cycloheptylamino, vorzugsweise Cyclopropylamino und Cyclohexylamino, insbesondere Cyclopropylamino;
weitere Reste für ggf. subst. ein- oder zweikernige aromatische oder heteroaromatische Reste:
Alkenyl, Alkinyl, Halogenalkenyl, Halogenalkinyl, Alkenyloxy, Alkinyloxy, Halogenalkenyloxy, Halogenalkinyloxy, Alkenylthio, Alkinylthio, Alkylsulfoxy, Alkylsulfonyl, Alkenylsulfoxy, Alkinylsulfoxy, Alkinylsulfonyl,
Vorzugsweise werden für die vorliegende Erfindung als Lösemittel Alkohole oder Alkohol enthaltende Gemische eingesetzt. Als Alkohol wird hierbei insbesondere ein solcher ausgewählt, bei dem R₁ ungleich R₂ ist. Als Lösemittel können außerdem Benzol, alkylierte Benzole, aliphatische und cycloaliphatische Ether eingesetzt werden.

Ein Vorteil bei der Wahl eines Alkohols, bei dem R₁ ungleich R₂ ist, ist, daß es möglich wird, den Zielmolekülrest R₂ durch den Alkoholrest R₂ zu bestimmen und den preisgünstigsten Orthoester einzusetzen.

Erfindungsgemäß wird die Reaktion vorzugsweise in Gegenwart einer mit dem Edukt zur Esterbildung befähigten Verbindung durchgeführt. Hierfür kommen z.B. Orthoester, insbesondere Trialkyl-bzw. Triarylorthoester oder Lactonacetale in Betracht. Erfindungsgemäß bevorzugt werden demgemäß Trialkylorthoformiate. Ganz besonders bevorzugt sind Methyl- oder Ethylorthoformiate.

In den einzelnen Schritten können Katalysatoren zugesetzt werden. Hierfür kommen z.B. Lewis-Säuren und Brönsted-Säuren in Betracht. Insbesondere sind hier Protonendonatoren zu nennen. Beispiele sind Halogenwasserstoffe, Phosphorsäuren, Schwefelsäuren u.ä. Bevorzugt sind Halogenwasserstoffe, insbesondere Salzsäure. Die Katalysatoren werden vorzugsweise recycelt.

Bei den entstehenden Produkten handelt es sich um 6-Alkoxy-(oder 6-Aryloxy 6H)-dibenz[c,e][1,2]-oxaphosphorine. Bei den Alkoxygruppen handelt es sich vorzugsweise um Methoxy-, Ethoxy- oder Propoxy-Reste.

Das erfindungsgemäße Verfahren ermöglicht die Darstellung der 6-Alkoxy-(6H)-dibenz[c,e][1,2]-oxaphosphorine, insbesondere wenn als Lösemittel Alkohol verwendet wird, direkt aus industriell verfügbaren 6H-Dibenz[c,e][1,2]-oxaphosphorin-6-oxiden in einem Syntheseschritt mit ausgezeichneten Ausbeuten. Vorteilhaft ist, dass unter technischen Bedingungen auf die Feindestillation verzichtet werden kann, und hierbei eine Reinheit von über 96 % nach der Gaschromatographie erzielt wird.

Ferner ist vorteilhaft, dass das erfindungsgemäße Verfahren ein halogenfreies Arbeiten ermöglicht. Sofern z.B. Salzsäure zum Einsatz kommt wird diese lediglich als Katalysator eingesetzt. Diese wird bei der Entfernung des überschüssigen Alkohols mit recycelt. Die Folge hiervon ist, dass keine Halogenidabfälle entstehen. Weiterer Vorteil der vorliegenden Erfindung ist, dass die eingesetzten Edukte preiswert verfügbar sind. Außerdem ermöglicht die vorliegende Erfindung bei Einsatz saurer Harze als Katalysatoren ein kontinuierliches Arbeiten. Ausgehend von o-Hydroxybiphenyl und Phosphortrichlorid handelt es sich um ein zweistufiges Verfahren, während im Stand der Technik dreistufige Verfahren zum Einsatz kommen.

Im folgenden wird die Erfindung unter Bezugnahme auf die Beispiele näher erläutert:

### 6-Methoxy-(6H)-dibenz[c,e][1,2]-oxaphosphorin aus 6H-Dibenz [c,e][1,2]-oxaphosphorin-6-oxid und Trimethylorthoformiat in Methanol

1,33 mol (287,5 g) 6H-Dibenz[c,e][1,2]-oxaphosphorin-6-oxid und 2,5 ml konz. HCl werden in 1230 ml Methanol gelöst und die Mischung wird auf 85°C zum Rückfluß erhitzt (leichter Überdruck). Nach 45 min. werden weitere 0,5 ml konz. HCl zugegeben und anschließend innerhalb von 5h 2,7 mol (295 ml) Trimethylorthoformiat zugetropft. Während des Zutropfens des Trimethylorthoformiats werden alle 30 min. jeweils 0,5 ml konz. HCl zugefügt. Nach Beendigung der Reaktion werden alle flüchtigen Bestandteile am Rotationsverdampfer unter reduziertem Druck entfernt. Der gelbe, ölige Rückstand wird im Feinvakuum (0,1 mbar) destilliert. Bei 130-135°C destilliert das Produkt als farblose, ölige Flüssigkeit, welche langsam nach mehreren Wochen erstarrt. Ausbeute: 265 g, 87% der Theorie.

### 6-Ethoxy-6H-dibenz[c,e][1,2]-oxaphosphorin aus 6H-Dibenz[c,e][1,2]-oxaphosphorin-6-oxid, Ethanol und Triethylorthoformiat

0,2 mol (43,2 g) 6H-Dibenz[c,e][1,2]-oxaphosphorin-6-oxid und 0,5 ml konz. HCl werden in 352 ml Ethanol gelöst und die Mischung wird auf 90°C zum Rückfluß erhitzt (leichter Überdruck). Nach 50 min. werden weitere 0,1 ml konz. HCl zugegeben und anschließend innerhalb von 4 h 0,4 mol (59.3 g, 66.5 ml) Triethylorthoformiat zugetropft. Während des Zutropfens des Triethylorthoformiats werden alle 30 min. jeweils 0,1 ml konz. HCl zugegeben. Nach Beendigung der Reaktion werden alle flüchtigen Bestandteile am Rotationsverdampfer unter reduziertem Druck entfernt. Der gelbe, ölige Rückstand wird im Feinvakuum (0,1 mbar) destilliert. Bei 135-142°C destilliert das Produkt als farblose, ölige Flüssigkeit (erstarrte Schmelze Fp = 42°C). Ausbeute: 44,8 g, 92% der Theorie.

### 6-Ethoxy-6H-dibenz[c,e][1,2]-oxaphosphorin aus aus 6H-Dibenz[c,e][1,2]-oxaphosphorin-6-oxid Edukt, Ethanol und Trimethylorthoformiat

5,0 mol (1081 g) 6H-Dibenz[c,e][1,2]-oxaphosphorin-6-oxid und 2,0 ml konz. HCl werden in 4400 ml Ethanol gelöst und die Mischung wird auf 95°C zum Rückfluß erhitzt (leichter Überdruck). Nach 1 h werden weitere 1,0 ml konz. HCl zugegeben und anschließend innerhalb von 8 h 6,5 mol (689,8 g 711,1 ml) Trimethylorthoformiat zugetropft. Während des Zutropfens des Trimethylorthoformiats werden alle 30 min. jeweils 1,0 ml konz. HCl zugefügt. Nach Beendigung der Reaktion werden alle flüchtigen Bestandteile am Rotationsverdampfer unter reduziertem Druck entfernt. Der gelbe, ölige Rückstand wird im Feinvakuum (0,1 mbar) destilliert. Bei 135-142°C destilliert das Produkt als farblose, ölige Flüssigkeit (erstarrte Schmelze Fp = 42°C). Ausbeute: 1001,0 g, 82% der Theorie.

### 6-iso-Propoxy-6H-dibenz[c,e][1,2]-oxaphosphorin aus aus 6H-Dibenz[c,e][1,2]-oxaphosphorin-6-oxid Edukt, iso-Propanol und Triethylorthoformiat

0,28 mol (59,5 g) 6H-Dibenz[c,e][1,2]-oxaphosphorin-6-oxid werden in 600 ml iso-Propanol gelöst. 0,6 ml konz. HCl werden zugesetzt und die Mischung auf 105°C zum Rückfluß erhitzt (leichter Überdruck). Nach 1 h werden weitere 0,15 ml konz. HCl zugegeben und anschließend innerhalb von 3 h 0,55 mol (81,5 g, 92 ml) Triethylorthoformiat zugetropft. Während des Zutropfens des Triethylorthoformiats werden alle 15 min. jeweils 0,15 ml konz. HCl zugefügt. Nach Beendigung der Reaktion werden alle flüchtigen Bestandteile am Rotationsverdampfer unter reduziertem Druck entfernt. Der gelbe, ölige Rückstand wird im Feinvakuum (0,1 mbar) destilliert. Bei 142-145°C destilliert das Produkt als farblose, ölige Flüssigkeit. Ausbeute: 35,2 g, 78% der Theorie.

## Patentansprüche

1. Verfahren zur Herstellung von 6-A)koxy-(6H)-dibenz[c,e][1,2]-oxaphosphorinen,
**dadurch gekennzeichnet, daß** 6H-Dibenz[c,e][1,2]-oxaphosphorin-6-oxide der Formel I 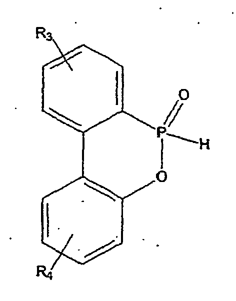 mit R3, R4 = Alkyl-, Alkoxy-, Alkylthio-, Alkenyl-, Alkinyl-, Aryl-, Heteroaryl-, Cyclolakyl-Gruppen
als Edukt eingesetzt werden.

2. Verfahren nach Anspruch 1,
**dadurch gekennzeichnet, dass** die Herstellung in folgenden Schritten erfolgt:
1) Bereitstellung wenigstens eines Lösemittels
2) Zugabe des Edukts
3) Zugabe eines Orthoesters und
4) Zusatz von Alkohol falls dieser nicht schon unter Stufe 1) verwendet wird.

3. Verfahren nach einem der Ansprüche oder 2,
**dadurch gekennzeichnet, dass** als Lösemittel Alkohol oder Alkohol enthaltenden Gemische eingesetzt werden.

4. Verfahren nach Anspruch 3,
**dadurch gekennzeichnet, dass** Alkohole der Formel R₂OH eingesetzt werden, wobei R₂ Alkyl bedeutet.

5. Verfahren nach einem der Ansprüche 1 bis 4,
**dadurch gekennzeichnet, dass** die Reaktion in Gegenwart einer mit 6H-Dibenz[c,e][1,2]-oxaphosphorin-6-oxiden zur Esterbildung befähigten Verbindung durchgeführt wird.

6. Verfahren nach einem der Ansprüche 1 bis 5,
**dadurch gekennzeichnet, dass** die Reaktion in Gegenwart eines Trialkylorthoformiats durchgeführt wird.

7. Verfahren nach Anspruch 6,
**dadurch gekennzeichnet, dass** die Reaktion in Gegenwart eines Tri-Methyl- oder Tri-Ethylorthoformiats durchgeführt wird.

8. Verfahren nach einem der Ansprüche 1 bis 7,
**dadurch gekennzeichnet, dass** es in Gegenwart von Katalysatoren durchgeführt wird.

9. Verfahren nach Anspruch 8,
**dadurch gekennzeichnet, dass** als Katalysatoren Lewis-Säuren oder Brönsted-Säuren eingesetzt werden.

10. Verfahren nach Anspruch 9,
**dadurch gekennzeichnet, dass** als Säuren Protonendonatoren eingesetzt werden.

11. Verfahren nach Anspruch 10,
**dadurch gekennzeichnet, dass** als Säuren Halogenwasserstoffe eingesetzt werden.

12. Verfahren nach Anspruch 1-11,
**dadurch gekennzeichnet, dass** der überschüssige Alkohol entfernt und zugleich der Katalysator recycelt wird.

## Claims

1. Process for preparing 6-alkoxy-(6H)-dibenzo[c,e][1,2]oxaphosphorins,
**characterized in that** 6H-dibenzo[c,e][1,2]oxaphosphorin 6-oxides of the formula I 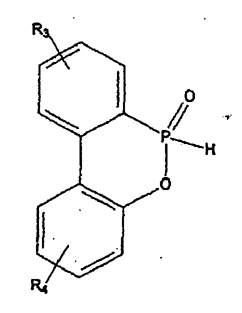 where R3, R4 = alkyl, alkoxy, alkylthio, alkenyl, alkynyl, aryl, heteroaryl, cycloalkyl groups
are used as the reactant.

2. Process according to Claim 1,
**characterized in that** the preparation is effected in the following steps:
1) providing at least one solvent,
2) adding the reactant
3) adding an ortho ester and
4) adding alcohol if it has not already been used under stage 1).

3. Process according to one of Claims 1 and 2,
**characterized in that** the solvent used is an alcohol or alcohol-containing mixtures.

4. Process according to Claim 3,
**characterized in that** alcohols of the formula R₂OH are used where R₂ is alkyl.

5. Process according to one of Claims 1 to 4,
**characterized in that** the reaction is carried out in the presence of a compound capable of ester formation with 6H-dibenzo[c,e][1,2]oxaphosphorin 6-oxides.

6. Process according to one of Claims 1 to 5,
**characterized in that** the reaction is carried out in the presence of a trialkyl orthoformate.

7. Process according to Claim 6,
**characterized in that** the reaction is carried out in the presence of trimethyl or triethyl orthoformate.

8. Process according to one of Claims 1 to 7,
**characterized in that** it is carried out in the presence of catalysts.

9. Process according to Claim 8,
**characterized in that** the catalysts used are Lewis acids or Brønsted acids.

10. Process according to Claim 9,
**characterized in that** the acids used are proton donors.

11. Process according to Claim 10,
**characterized in that** the acids used are hydrogen halides.

12. Process according to Claim 1-11,
**characterized in that** the excess alcohol is removed and the catalyst is simultaneously recycled.

## Revendications

1. Procédé pour la préparation de 6-alcoxy-(6H)-dibenz[c,e][1,2]-oxaphosphorines, **caractérisé en ce qu'**on utilise du 6H-dibenz[c,e][1,2]-oxaphosphorin-6-oxyde de formule I 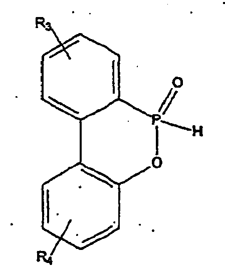 avec R3, R4 = des groupes alkyle, alcoxy, alkylthio, alcényle, alcynyle, aryle, hétéroaryle, cycloalkyle comme produits de départ.

2. Procédé selon la revendication 1, **caractérisé en ce que** la préparation est réalisée par les étapes suivantes:
1) Préparation d'au moins un solvant
2) Addition du produit de départ
3) Addition d'un orthoester et
4) Addition de l'alcool, si celui-ci n'a pas encore été utilisé dans l'étape 1).

3. Procédé selon l'une quelconque des revendications 1 ou 2, **caractérisé en ce qu'**on utilise comme solvant un alcool ou des mélanges contenant un alcool.

4. Procédé selon la revendication 3, **caractérisé en ce qu'**on utilise des alcools de formule R₂OH, R₂ signifiant alkyle.

5. Procédé selon l'une quelconque des revendications 1 à 4, **caractérisé en ce que** la réaction est réalisée en présence d'un composé apte à la formation d'esters avec des 6H-dibenz[c,e][1,2]-oxaphosphorin-6-oxydes.

6. Procédé selon l'une quelconque des revendications 1 à 5, **caractérisé en ce que** la réaction est réalisée en présence d'un trialkylorthoformiate.

7. Procédé selon la revendication 6, **caractérisé en ce que** la réaction est réalisée en présence d'un triméthylorthoformiate ou d'un triéthylorthoformiate.

8. Procédé selon l'une quelconque des revendications 1 à 7, **caractérisé en ce qu'**il est réalisé en présence de catalyseurs.

9. Procédé selon la revendication 8, **caractérisé en ce qu'**on utilise, comme catalyseurs, des acides de Lewis ou des acides de Brönstedt.

10. Procédé selon la revendication 9, **caractérisé en ce qu'**on utilise, comme acides, des donneurs de protons.

11. Procédé selon la revendication 10, **caractérisé en ce qu'**on utilise, comme acides, des hydracides halogénés.

12. Procédé selon la revendication 1-11, **caractérisé en ce que** l'alcool en excès est éliminé et que le catalyseur est simultanément recyclé.
